# EUROPEAN PATENT APPLICATION

(11) **EP 4 549 784 A1**
(43) Date of publication of application: **07.05.2025**
(21) Application number: 23830077.6
(22) Date of filing: 21.06.2023
(51) Int. Cl.: F16K 1/36

(54) **STOP VALVE**

(30) Priority: 30.06.2022 CN 202221673247 U; 30.06.2022 CN 202221674476 U
(71) Applicant: Zhejiang Dunan Artificial Environment Co., Ltd., Shaoxing Zhejiang 311835 (CN)
(72) Inventor: ZHOU, Feng, Shaoxing, Zhejiang 311835 (CN); LOU, Feng, Shaoxing, Zhejiang 311835 (CN); FENG, Guanghua, Shaoxing, Zhejiang 311835 (CN); HE, Shanjun, Shaoxing, Zhejiang 311835 (CN); CHEN, Diyong, Shaoxing, Zhejiang 311835 (CN)
(74) Representative: Petraz, Gilberto Luigi
(86) International application number: PCT/CN2023/101648
(87) International publication number: WO 2024/001898

(57) **Abstract**

A stop valve (100) is provided. A stop valve (100) includes a valve body (10), a valve core (20) and a connecting block (30). The valve body (10) is provided with a first opening (11) and a second opening (12). At least part of the valve core (20) is located in the valve body (10), and the valve core (20) is movable in the valve body (10) to communicate the first opening (11) with the second opening (12) and cut off a communication between the first opening (11) and the second opening (12). One end of the connecting block (30) is located outside the valve body (10), the other end of the connecting block (30) is fixedly connected to an end of the valve body (10), and a part of the valve core (20) extends into the connecting block (30) and is in threaded fit with the connecting block (30). The connecting block (30) extends towards the valve body (10) to define a seal portion (31) along an axis of the valve core (20), and when the stop valve (10) is in a fully opened state, the valve core (20) is capable of abutting against the seal portion (31) and forming a linear seal therewith.

## Description

### CROSS-REFERENCE TO RELATED APPLICATIONS

This application claims priority to Chinese patent application Nos. 202221674476.X, filed on June 30, 2022, and titled "STOP VALVE", and 202221673247.6, filed on June 30, 2022, and titled "STOP VALVE". The contents of the above identified applications are hereby incorporated herein in their entireties by reference.

### TECHNICAL FIELD

The present application relates to the field of refrigerant technology, and in particular, to a stop valve.

### BACKGROUND

In an air conditioning system, a stop valve plays an important role in cutting off and throttling a medium in a pipeline where the stop valve is disposed.

In related technology, the stop valve includes a valve body, a valve core, and a connecting block. The overall valve body is sleeved on the connecting block and fixedly connected to the connecting block. The valve core extends into the connecting block and is in threaded fit with the connecting block. In this way, the valve core can move in the valve body by the valve core being in threaded fit with the connecting hole, thereby opening and closing the stop valve. However, the overall valve body is sleeved on the connecting block, which may result in an increased size of the valve body, leading to more material required for processing the valve body and a high cost of the stop valve.

### SUMMARY

According to various embodiments of the present application, a stop valve is provided. The stop valve includes a valve body, a valve core and a connecting block. The valve body is provided with a first opening and a second opening. At least part of the valve core is located in the valve body. The valve core is movable in the valve body to communicate the first opening with the second opening and cut off a communication between the first opening and the second opening. One end of the connecting block is located outside the valve body, and the other end of the connecting block is fixedly connected to an end of the valve body. A part of the valve core extends into the connecting block and is in threaded fit with the connecting block. The connecting block extends towards the valve body to define a seal portion along an axis of the valve core. When the stop valve is in a fully opened state, the valve core is capable of abutting against the seal portion and forming a linear seal therewith.

In an embodiment, a side surface of the seal portion towards the valve body is fixedly connected to an inner sidewall of the valve body. A side surface of the seal portion away from the valve body is separate from the valve core.

In an embodiment, a periphery of the valve core protrudes from the inner sidewall of the valve body to define a first conical portion. A conical surface of the first conical portion is capable of abutting against the seal portion and forming a linear seal therewith.

In an embodiment, the stop valve further includes a guiding block. The guiding block is located in and connected to the valve body. The guiding block is arranged towards the first opening and the second opening relative to the connecting block. The guiding block is located on a periphery of a part of the valve core. The valve core is capable of moving along a guiding direction of the guiding block to communicate the first opening with the second opening or cut off the communication between the first opening and the second opening.

In an embodiment, the second opening is located on a periphery of the valve body. A projection of the guiding block which is located on the valve body along a radial direction of the valve body does not overlap with the second opening.

In an embodiment, the guiding block includes a guiding bevel. The guiding bevel is disposed on an end of the guiding block towards the connecting block.

In an embodiment, the stop valve further includes a valve seat. The valve seat is disposed in the valve body. The valve seat is located between the first opening and the second opening and connected to the valve body. When the stop valve is in a closed state, one end of the valve core is connected to the connecting block, and the other end of the valve core abuts against the valve seat and cooperates with the valve seat in a hard-seal manner or a soft-seal manner.

In an embodiment, a second conical portion is defined by an end of the valve core towards the valve seat. A part of the second conical portion is located in the valve seat. A conical surface of the second conical portion is capable of abutting against the valve seat and form the linear seal therewith.

In an embodiment, the stop valve further includes a first sealing component. An end of the valve core away from the connecting block is provided with a first groove. The first sealing component is disposed in the first groove. An end surface of the valve seat towards the valve core is provided with a protrusion portion. The protrusion portion protrudes from the valve seat. The first sealing component abuts against the protrusion portion and form a soft seal.

In an embodiment, the first opening is disposed on an end of the valve body away from the connecting block. The second opening is disposed on a periphery of the valve body. An angle is defined between an axis of the first opening and an axis of the second opening. Alternatively, the first opening and the second opening are both disposed on the periphery of the valve body. The axis of the first opening is parallel to the axis of the second opening. The first opening and the second opening are disposed on different sides of the periphery of the valve body, respectively.

In an embodiment, the stop valve further includes a first connecting pipe and a second connecting pipe. The first connecting pipe is fixedly connected to the first opening, and the second connecting pipe is fixedly connected to the second opening.

In an embodiment, the stop valve further includes a first transitional connecting pipe and a second transitional connecting pipe. The first transitional connecting pipe is sleeved on the first connecting pipe. The second transitional connecting pipe is sleeved on the second connecting pipe. A material of the first transitional connecting pipe is different from a material of the first connecting pipe. A material of the second transitional connecting pipe is different from a material of the second connecting pipe.

Details of one or more embodiments of this disclosure are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a schematic diagram of a stop valve of one or more embodiments.
FIG. 2 is a cross-sectional schematic view of a stop valve of one or more embodiments.
FIG. 3 is a partial enlarged view of portion A in FIG. 2.
FIG. 4 is a cross-sectional schematic view of a stop valve in a closed state in one or more embodiments.
FIG. 5 is a partial enlarged view of portion B in FIG. 4.
FIG. 6 is a cross-sectional schematic view of a stop valve in a opened state in one or more embodiments.
FIG. 7 is a schematic diagram of a stop valve of one or more embodiments.
FIG. 8 is a cross-sectional schematic view of a stop valve of one or more embodiments.
FIG. 9 is a cross-sectional schematic view of a stop valve of one or more embodiments.

Reference signs are as follows: 100 represents a stop valve; 10 represents a valve body; 11 represents a first opening; 12 represents a second opening; 13 represents a flanged hole; 20 represents a valve core; 21 represents a first conical portion; 22 represents a first groove; 23 represents a limiting portion; 24 represents a second conical portion; 25 represents a second groove; 30 represents a connecting block; 31 represents a seal portion; 40 represents a valve seat; 41 represents a protrusion portion; 50 represents a first sealing component; 60 represents a first connecting pipe; 61 represents a first transitional connecting pipe; 70 represents a second connecting pipe; 71 represents a second transitional connecting pipe; 80 represents a guiding block; 81 represents a guiding bevel; and 90 represents a second sealing component.

### DETAILED DESCRIPTION

The following will provide a clear and complete description of the technical solution in the embodiments of the present application, in communication with the accompanying drawings. Obviously, the described embodiments are only a part of the embodiments of the present application, not all of them. Based on the embodiments in the present application, all other embodiments obtained by ordinary skill in this art without creative labor fall within the scope of protection of the present application.

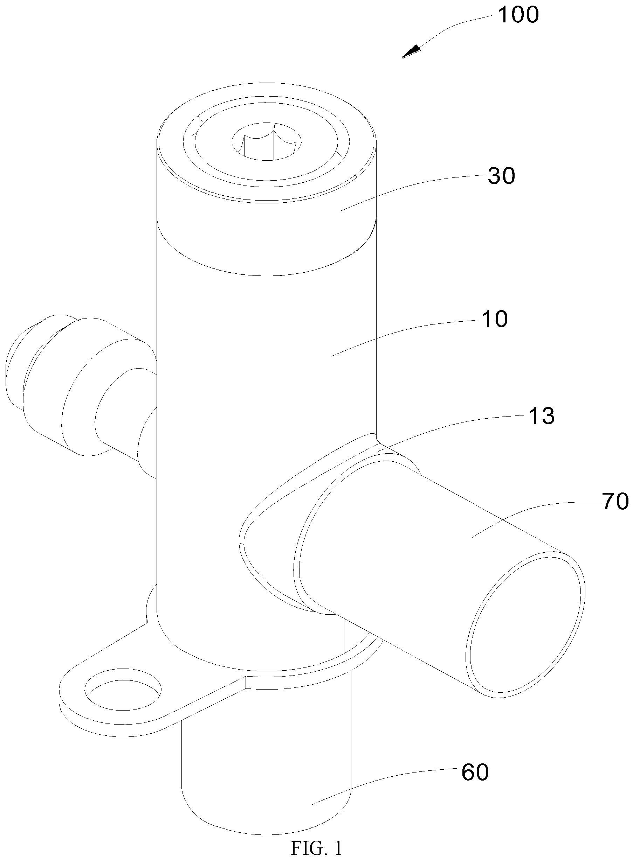

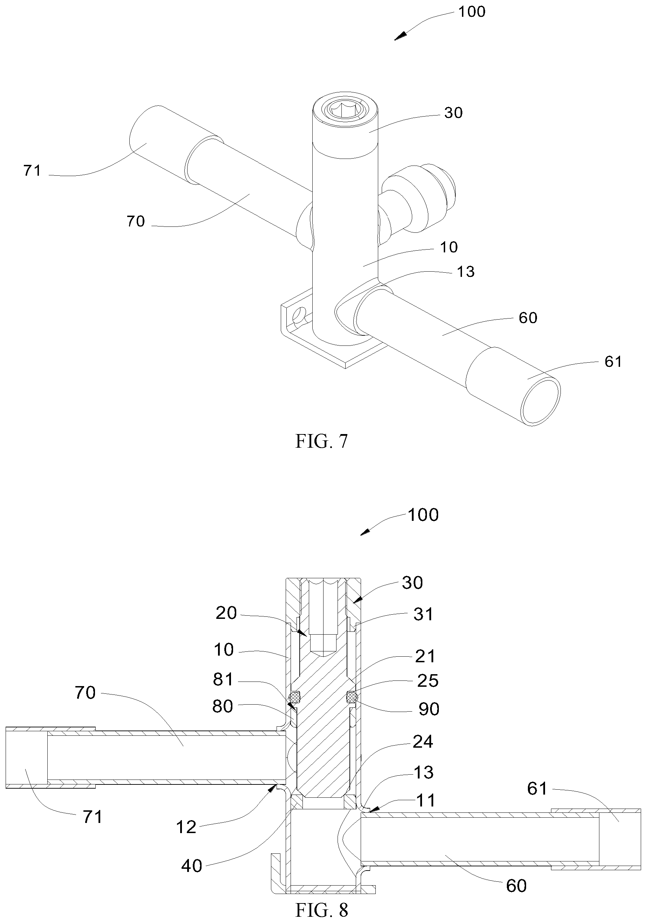

Referring to FIGs. 1 and 7, the present application provides a stop valve 100 mounted in an air conditioning system. In the air conditioning system, the stop valve 100 plays an important role in cutting off and throttling a medium in a pipeline of the air conditioning system.

In related technology, the stop valve includes a valve body, a valve core and a connecting block. The valve body is sleeved on the connecting block and fixedly connected to the connecting block. The valve core is in threaded fit with the connecting block to realize the valve core moving in the valve body, thereby opening or closing the stop valve. However, the valve body is sleeved on the connecting block, which may result in an increase size of the valve body, leading to more material required for processing and a high cost of the stop valve.

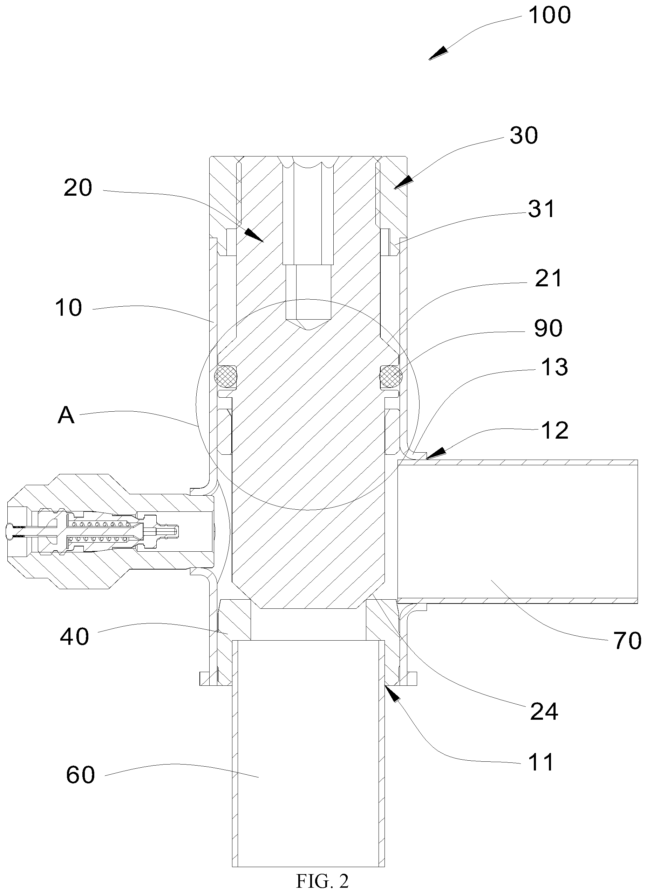

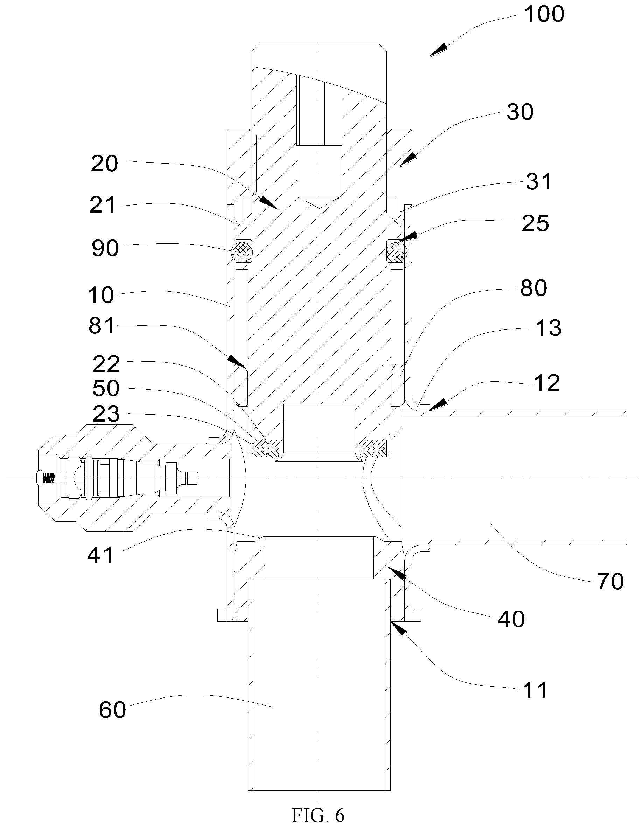

In order to solve above problems, referring to FIGs. 2 to 9, the stop valve 100 provided in the present application includes a valve body 10, a valve core 20 and a connecting block 30. The valve body 10 is provided with a first opening 11 and a second opening 12. At least part of the valve core 20 is located in the valve body 10, and the valve core 20 is movable in the valve body 10 to communicate the first opening 11 with the second opening 12 or cut off a communication between the first opening 11 and the second opening 12. One end of the connecting block 30 is located outside the valve body 10, and the other end of the connecting block 30 is fixedly connected to the valve body 10. A part of the valve core 20 extends into and is in threaded fit with the connecting block 30.

Comparing with the stop valve 100 in the present application, when an area of a cross section of the connecting block 30 is unchanged, the valve body in the related technology is sleeved on the connecting block, which may result in an increase size of the valve body and more material required for processing. In the present application, the valve body 10 is processed by pipes or rods. A side surface of the valve body 10 is provided with a flanged hole 13. The flanged hole 13 is connected to a connecting pipe. One end of the connecting block 30 is located outside the valve body 10, and the other end of the connecting block 30 is fixedly connected to the valve body 10, thereby reducing a diameter of the valve body 10, a material consumption of the valve body 10, and a cost of the stop valve 100. In addition, thread strength between the connecting block 30 and the valve core 20 can be improved, thereby improving stability of the overall stop valve 100.

Referring to FIGs. 2, 4, 6, 8 and 9,the connecting block 30 towards the valve body 10 extends towards the valve body 10 to define a seal portion 31 along an axis of the valve core 20. A side surface of the seal portion 31 towards the valve body 10 is fixedly connected to an inner sidewall of the valve body 10. A side surface of the seal portion 31 away from the valve body 10 is separated from the valve body 20. The seal portion 31 abuts against the inner sidewall of the valve body 10, which can improve a contact area between the seal portion 31 and the inner sidewall of the valve body 10, thereby improving connecting strength between the seal portion 31 and the valve body 10. Therefore, connecting strength between the connecting block 30 and the valve body 10 is improved, and stability of the connecting block 30 is improved.

When the stop valve 100 is located in a fully opened state, the valve core 20 can abut against the seal portion 31 to define a linear seal. A periphery of the valve core 20 protrudes towards the inner wall of the valve body 10 to define a first conical portion 21. A conical portion of the first conical portion 21 can abut against the seal portion 31 and form the linear seal therewith, thereby improving reverse sealing performance between the connecting block 30 and the valve 20 and preventing the medium of the pipeline from leaking. Therefore, no additional sealing structure is required, a cost of the material is reduced, and difficulty of processing and assembling the stop valve 100 is lowered.

The seal portion 31 can play a role in restricting the valve core 20, thereby limiting a maximum valve opening of the stop valve 100. During an operation process of the stop valve 100, when the valve core 20 moves towards the connecting block 30 along the axis of the valve core 20 until the valve core 20 abuts against the seal portion 31, the stop valve 100 can reach to a state of the maximum valve opening.

The stop valve 100 further includes a valve seat 40, a first connecting pipe 60, and a second connecting pipe 70. The valve seat 40 is disposed in the valve body 10, located between the first opening 11 and the second opening 12, and connected to the valve body 10. The first connecting pipe 60 is fixedly connected to the first opening 11. The second connecting pipe 70 is fixedly connected to the second opening 12. The first connecting pipe 60 is inserted into the first opening 11. The first opening 11 is in communication with the air conditioning pipeline through the first connecting pipe 60. The second connecting pipe 70 is inserted into the second opening 12. The second opening 12 is in communication with the air conditioning pipeline through the second connecting pipe 70. The valve seat 40 can play a role in restricting the valve core 20 to move away from the connecting block 30. When the stop valve 100 is in a closed state, the valve core 20 abuts against the valve seat 40 and cooperates with the valve seat 40 to realize a seal, thereby cutting off the communication between the first opening 11 and the second opening 12. When the stop valve 100 is in an opened state, the valve core 20 does not abut against the valve seat 40, such that the medium is capable of being in communication between the first opening 11 and second opening 12.

Furthermore, the stop valve 100 further includes a guiding block 80. The guiding block is located in and connected to the valve body 10. The guiding block 80 is disposed towards the first opening 11 and the second opening 12 relative to the connecting block 30. The guiding block 80 is located on a periphery of a part of the valve core 20, and the valve core 20 can move along a guiding direction of the guiding block 80 to communicate the first opening 11 with the second opening 12 or cut off the communication between the first opening 11 and the second opening 12.

Comparing a stop valve in the related technology with the stop valve 100 in the present application, a connecting block in the related technology is disclosed in a valve body and threadedly connected to a valve core; the valve core moves along an axis of the valve core in a valve body only by a connecting block, However, by such arrangement, an axis of the valve core may be deviated from an axis of the valve body during a process of assembling or operating the valve core, such that the valve core can not greatly abut against the valve seat, leading to a leakage of a medium leaksand reducing a sealing performance of the stop valve.

In the present application, the valve core 20 can move along the guiding direction of the guiding block 80 by providing the guiding block 80 in the valve body 10. The guiding block 80 cooperates with the connecting block 30, thereby further reducing probability of deviation of the valve core 20, and ensuring axes of the valve core, the valve body and the valve seat to coincide with each other. When the valve core 20 moves along the axis of the valve core 20 in the valve body 10 and moves towards the valve seat 40 to a limited position, the valve core 20 can accurately abut against the valve seat 40, and the valve core 20 cooperateswith the valve seat 40 to realize an sealing effect, thereby improving the sealing performance of the stop valve 100. It means that the guiding block 80 prevents the valve core 20 from deviating in the valve body 10, thereby improving sealing reliability of the stop valve 100 after the valve core 20 cooperates with the valve seat 40.

In the present application, the guiding direction of the guiding block 80 is an axis direction of the guiding block 80.

Referring to FIG. 2, the second opening 12 is located on a periphery of the valve body 10, a projection of the guiding block 80 which is located on the valve body 10 along a radial direction of the valve body 10 does not overlap with the second opening 12. Therefore, it can prevent the guiding block 80 from hindering the medium which flows from the second opening 12 to an inner part of the valve body 10. Alternatively, the phenomenon that the guiding block 80 hinders the medium which flows from the inner part of the valve body 10 to the second opening 12 can be prevented. In addition, by such arrangement, noisy can be avoided in the valve body 10, such that the medium can smoothly flow, thereby improving a use performance of the stop valve 100.

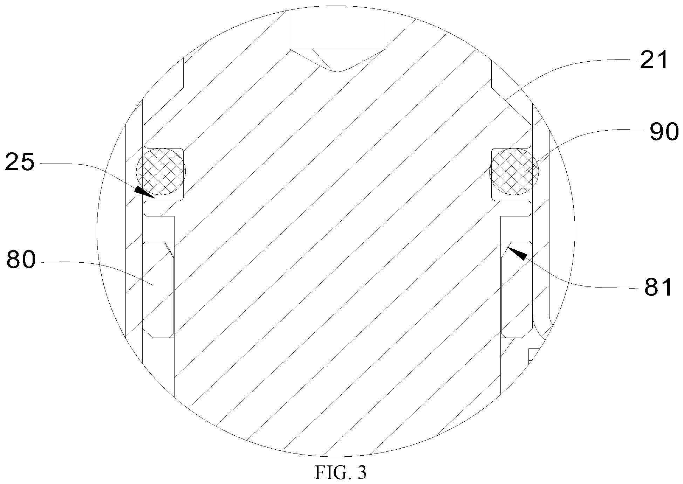

Furthermore, referring to FIGs. 2 and 3, the guiding block 80 includes a guiding bevel 81. The guiding bevel 81 is disposed on an end of the guiding block 80 towards the connecting block 30. The guiding bevel 81 is located on a side of the guiding block 80 towards the axis of the valve core 20. The guiding bevel 81 can play a enhancing role in guiding, facilitating guiding the valve core 20 to insert into the guiding block 80, preventing the valve core 20 and the guiding block 80 from bumping, and preventing the valve core 20 from being unable to insert into the the guiding block 80. Therefore, assembling efficiency of the valve core 20 is improved. Alternatively, in other embodiments, the guiding block 80 can be provided with other structures for playing a guiding role, except the guiding bevel 81.

### First embodiment

Referring to FIGs. 1 and 2, the first opening 11 is disposed on an end of the valve body 10 away from the connecting block 30. The second opening 12 is disposed on the periphery of the valve body 10. An angle is defined between an axis of the first opening 11 and an axis of the second opening 12. For example, the angle between the axis of the first opening 11 and the axis of the second opening 12 can include 75°, 90°, 120° and so on. The valve body 10 is a pipe-shaped hollow structure. The side periphery of the valve body 10 is provided with at least one flanged hole 13. The second opening 12 is defined by the at least one flanged hole 13. An angle is defined between the first connecting pipe 60 and the second connecting pipe 70. The first opening 11 and the second opening 12 are regarded as an inlet or an outlet of the medium, respectively, such that the medium flows in the stop valve 100.

At least part of the valve seat 40 is provided in the valve body 10 through the first opening 11. The first connecting pipe 60 is inserted into and fixedly connected to the valve seat 40. The periphery of the valve body 10 is provided with the at least one flanged hole 13. Flanging of the at least one flanged hole 13 can increase a connecting area between the valve body 10 and the second connecting pipe 70, facilitating connecting the valve body 10 with the second connecting pipe 70, and improving connecting strength between the valve body 10 and the second connecting pipe 70. When the stop valve 100 is in the opened state, the medium enters the valve body 10 through the first opening 11, and flows outside the valve body 10 through the second opening 12. Alternatively, the medium enters the valve body 10 through the second opening 12, and flows outside the valve body 10 through the first opening 11.

Referring to FIG. 2, when the stop valve 100 is in the closed state, one end of the valve core 20 is connected to the connecting block 30, the other end of the valve core 20 abuts against the valve seat 40 and cooperates with the valve seat 40 in a hard-seal manner. The valve core 20 can be prevented from deviating by being in threaded fit with the connecting block 30 and a guiding of the guiding block 80, such that the valve core 20 can move in the valve body 10 along the axis of the valve body 10. When the valve core 20 moves towards the valve seat 40 to the limited position, an end of the valve core 20 abuts against the valve seat 40 and cooperates with the valve seat 40 to realize the sealing, thereby improving the sealing performance of the stop valve 100.

A second conical portion 24 is defined by an end of the valve core 20 towards the valve seat 40. A part of the second conical portion 24 is located in the valve seat 40. A conical surface of the second conical portion 24 can abut against the valve seat 40 and form a linear seal therewith. The valve core 20 is in threaded fit with the connecting block 30 to realize the valve core 20 moving in the valve body 10 along the axis of the valve body 10. When the second conical portion 24 of the valve core 20 abuts against the valve body 40, the conical surface of the second conical portion 24 forms the linear seal with the valve seat 40. A circular intersection line defined by an end of the valve seat 40 towards the valve core 20 intersecting with an inner sidewall of the valve seat 40 abuts against the conical surface of the second conical portion 24 to form a linear contact. The second conical portion is in tight fit with the valve seat 40 to cut off the communication between the first opening 11 and the second opening 12. In one hand, the valve core 20 is restricted, and in the other hand, the linear contact realizes a hard seal between the valve core 20 and the valve body 10, thereby improving a sealing performance between the valve core 20 and the valve body 10. In addition, the conical surface of the second conical portion 24 is processed simply, which can save an amount of materials of the stop valve 100, thereby improving efficiency of processing and assembling the stop valve 100, and reducing a cost of the stop valve 100.

### Second embodiment

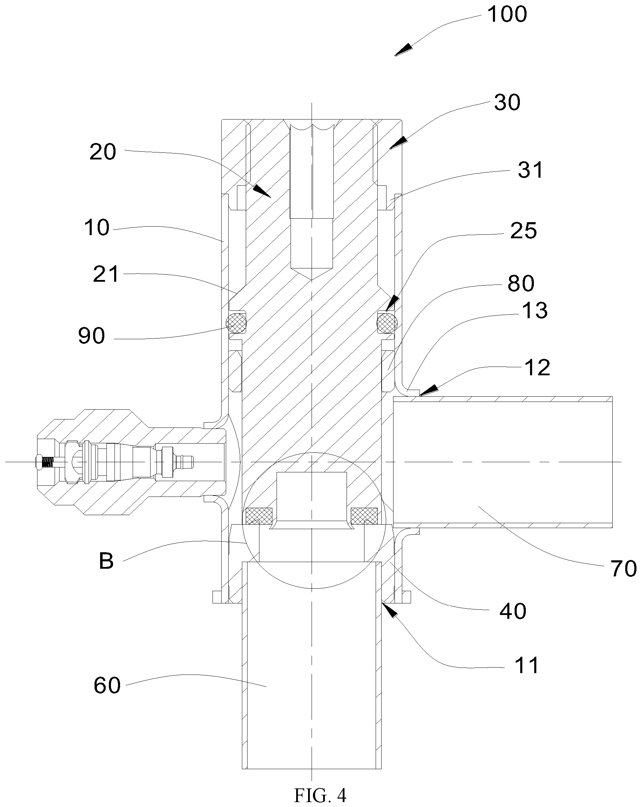

A structure of a stop valve 100 in the present embodiment is substantially the same as that of the stop valve 100 in the first embodiment, similarities thereof will not be repeated, and differences thereof are as follows: referring to FIG. 4, when the stop valve 100 is in the closed state, one end of a valve core 20 is connected to the connecting block 30, and the other end of the valve core 20 abuts against the valve seat 40 and cooperates with the valve seat 40 to define a soft seal. The valve core 20 can be prevented from deviating by being in threaded fit with the connecting block 30 and a guiding of the guiding block 80, such that the valve core 20 can move along the axis of the valve body 10 in the valve body 10. When the valve core 20 moves towards the valve seat 40 to its limit, an end of the valve core 20 abuts against the valve seat 40 and cooperates with the valve seat to realize a seal, and the communication between the first opening 11 and the second opening 12 is cut off.

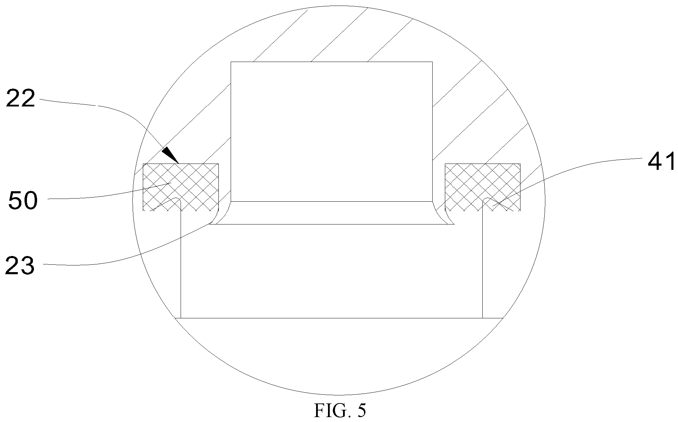

Referring to FIGs. 4 and 5, the stop valve 100 further includes a first sealing component 50. An end of the valve core 20 away from the connecting block 30 is provided with a first groove 22. The first sealing component 50 is disposed in the first groove 22. A surface of the valve seat 40 towards the valve core 20 is provided with a protrusion portion 41. The protrusion portion 41 protrudes from the valve seat 40. The first sealing component 50 can abut against the protrusion portion 41 and form the soft seal therewith.

The first sealing component 50 can be in interference fit with the first groove 22. The first sealing component 50 and the first groove 22 can support for each other by a compressive force generated by deformation of the first seal 50, such that the first sealing component is fixedly restricted in the first groove 22 to prevent the first sealing component 50 from detaching from the first groove 22 and reducing a sealing performance of the stop valve 100. The protrusion portion 41 can be inserted into and in tight fit with the first sealing component 50, thereby further improving the sealing performance of the stop valve 100 in the closed state.

A material of the first sealing component 50 is rubber having softness. Therefore, the first sealing component 50 can be easily embedded to the first groove 22. In addition, the first sealing component 50 can abut against the valve seat 40, such that the first sealing component 50 deforms, thereby improving a sealing performance of the first sealing component 50, and further improving the sealing performance of the stop valve 100. Alternatively, in other embodiments, the material of the first sealing component 50 can be other materials which can form the soft seal with the valve seat 40, which is not limited herein.

Furthermore, a limiting portion 23 is defined by an end of the valve core 20 towards the valve seat 40. The limiting portion 23 can restrict the first sealing component 50 to prevent the first sealing component from detaching from the first groove 22 and reducing the sealing performance of the stop valve 100. In the present embodiment, an end of a side wall of the the first groove 22 towards the axis of the valve core 20 extends away from the connecting block 30 and bends to form the limiting portion 23. The limiting portion 23 is in an expended-mouth shape. In other embodiments, the limiting portion 23 can be in a circular frustum shape, as long as the phenomenon that the first sealing component detaches from the first groove 22 can be prevented.

### Third embodiment

Referring to FIGs. 7 and 8, the first opening 11 and the second opening 12 are both provided around the periphery of the valve body 10, and an axis of the first opening 11 and an axis of the second opening 12 are separated with a distance. The first opening 11 and the second opening 12 are both provided around the periphery of the valve body 10, and the axis of the first opening 11 is parallel to the axis of the second opening 12.

The valve body 10 is a pipe-shaped hollow structure. The periphery of the valve body 10 is provided with at least two flanged holes 13. The first opening 11 and the second opening 12 are defined by the at least two flanged holes 13, respectively. The axis of the first opening 11 and the axis of the second opening 12 are separated with the distance. The first opening 11 and the second opening 12 are disposed on different sides of the periphery of the valve body 10, respectively. In an embodiment, the axis of the first opening 11 is parallel to the axis of the second opening 12. The first opening 11 and the second opening 12 are regarded as an inlet or an outlet of the medium, respectively, such that the medium flows in the stop valve 100.

The periphery of the valve body 10 is provided with the at least two flanged holes 13. Flanging of the flanged hole 13 can increase a connecting area between the first connecting pipe 60 and the second connecting pipe 70, facilitating connecting the valve body 10 with the first connecting pipe 60 and the second connecting pipe 70, thereby improving connecting strength among the valve body 10, the first connecting pipe 60 and the second connecting pipe 70. When the stop valve 100 is in the opened state, the medium enters the valve body 10 through the first opening 11 and flows outside the second opening 12. Alternatively, the medium enters the valve body through the second opening 12 and flows outside the first opening 11.

Referring to FIG. 8, when a stop valve 100 is in the closed state, one end of the valve core 20 is connected to the connecting block 30, the other end of the valve core 20 abuts against the valve seat 40 and cooperates with the valve seat 40 in a hard-seal manner. The valve core 20 can prevent from deviating by being in threaded fit with the connecting block 30 and a guiding of the guiding block 80, such that the valve core 20 can move in the valve body 10 along the axis of the valve body 10. When the valve core 20 moves towards the valve seat 40 to its limit, an end of the valve core 20 abuts against the valve seat 40 and cooperates with the valve seat 40 to realize a seal, thereby improving the sealing performance of the stop valve 100.

A second conical portion 24 is defined by an end of the valve core 20 towards the valve seat 40. A part of the second conical portion 24 is located in the valve seat 40. The conical surface of the second conical portion 24 can abut against the valve seat 40 to form the linear seal. The valve core 20 can move in the valve body 10 along the axis of the valve body 10 by being in thread fit with the connecting block 30. When the second conical portion 24 of the valve core 20 abuts against the valve body 40, a conical surface of the second conical portion 24 is in linear contact with the valve seat 40. A circular intersection line defined by an end of the valve seat 40 towards the valve core 20 intersecting a side wall of the valve seat 40 abuts against the conical surface of the second conical portion 24 to form the linear contact. The second conical portion 24 is in tight fit with the valve seat 40 to cut off the communication between the first opening 11 and the second opening 12. In one hand, the valve core 20 is restricted And in the other hand, the linear contact realizes a hard seal between the valve core 20 and the valve body 10, thereby improving a sealing performance between the valve core 20 and the valve body 10. Furthermore, the conical surface of the second conical portion 24 is processed simply, which can save an amount of a material of the stop valve 100, thereby improving a processing and assembling efficiency of the stop valve 100, and reducing a cost of the stop valve 100.

### Forth embodiment

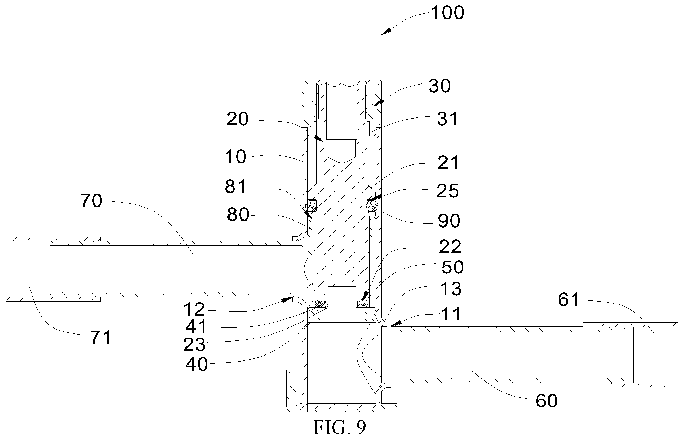

A structure of a stop valve 100 in the present embodiment is substantially the same as that of the stop valve 100 in the third embodiment, similarities thereof will not be repeated, and difference thereof is as follows: referring to FIG. 9, when the stop valve 100 is in the closed state, one end of the valve core 20 is connected to the connecting block 30, and the other end of the valve core 20 abuts against the valve seat 40 and cooperates with the valve seat 40 in the soft seal manner. The valve core 20 can prevent from deviating by being in threaded fit with the connecting block 30 and a guiding of a guiding block 80, such that the valve core 20 can move along the axis of the valve body 10 in the valve body 10. When the valve core 20 moves towards the valve seat 40 to its limit, an end of the valve core 20 abuts against the valve seat 40 and cooperates with the valve seat 40 to realize a seal, and the communication between the first opening 11 and the second opening 12 is cut off.

The stop valve 100 further includes a first sealing component 50. An end of the valve core 20 away from the connecting block 30 is provided with a first groove 22. The first sealing component 50 is disposed in the first groove 22. An end of the valve seat 40 towards the valve core 20 is provided with a protrusion portion 41. The protrusion portion 41 protrudes from the valve seat 40. The first sealing component 50 can abut against the protrusion portion 41 and form a soft seal therewith.

The first sealing component 20 can be in interference fit with the first groove 22. The first sealing component 50 and the first groove 22 can support for each other by a compressive force generated by deformation of the first seal 50, such that the first sealing component 50 is fixedly restricted in the first groove 22 to prevent the first sealing component from detaching from the first groove 22 and reducing the sealing performance of the stop valve 100. The protrusion portion 41 can be inserted into and in tight fit with the first sealing component 50, thereby further improving the sealing performance of the stop valve 100 in the closed state.

A material of the first sealing component 50 is rubber having softness. Therefore, the first sealing component 50 can be easily embedded to the first groove 22. In addition, the first sealing component 50 can abut against the valve seat 40, such that the first sealing component 50 deforms, thereby improving a sealing performance of the first sealing component 50, and further improving the sealing performance of the stop valve 100. Alternatively, in other embodiments, the material of the first sealing component 50 can be other materials which can form the soft seal with the valve seat 40, which is not limited herein.

Furthermore, a limiting portion 23 is defined by an end of the valve core 20. The limiting portion 23 can restrict the first sealing component 50 to prevent the first sealing component 50 from detaching from the first groove 22 and lowering the sealing performance of the stop valve 100. In the present embodiment, an end of a side wall of the the first groove 22 towards an axis of the valve core 20 extends away from the connecting block 30 and bends to form the limiting portion 23. The limiting portion is in an expended-mouth shape. In other embodiments, the limiting portion 23 can be in a circular frustum shape, as long as the limiting portion 23 can play a role in preventing the first sealing component 50 from detaching from the first groove 22.

Referring to FIGs. 2 to 9, the stop valve 100 further includes a second sealing component 90. The valve core 20 is provided with a second groove 25 between the connecting block 30 and the guiding block 80. The second sealing component 90 is disposed in the second sealing component 25 to prevent liquid from leaking.

The second sealing component 90 is a circumferential sealing component, i.e., the second sealing component 90 is a sealing ring encircling the periphery of the valve core 20, and the second groove 25 is correspondingly provided as a ring-shaped groove. Therefore, when the second sealing component 90 is disposed in the second groove 25, the second sealing component 90 can ensure sealing reliably between the valve core 20 and the valve body 10.

Referring to FIG. 7, the stop valve 100 further includes a first transitional connecting pipe 61 and a second transitional connecting pipe 71. The first transitional connecting pipe 61 is sleeved on the first connecting pipe 60. The second transitional connecting pipe 71 is sleeved on the second transitional connecting pipe 70. A material of the first transitional connecting pipe 61 is different from a material of the first connecting pipe 60. A material of the second transitional connecting pipe 71 is different from a material of the second connecting pipe. The first connecting pipe and the second connecting pipe are both made of stainless steel. The first transitional connecting pipe 61 and the second transitional connecting pipe 71 are both made of copper. Therefore, it is conducive to being welding to external pipelines, thereby improving efficiency for mounting the stop valve 100.

The various technical features of the above embodiments can be combined in any way. **In** order to make the description concise, not all possible combinations of the various technical features in the above embodiments have been described. However, as long as there is no contradiction in the combination of these technical features, they should be considered within the scope of the specification.

The above embodiments only express several embodiments of the present application, and their descriptions are more specific and detailed, but should not be understood as limiting the scope of the disclosure. It should be pointed out that for ordinary skill in the art, several modifications and improvements can be made without departing from the concept of the disclosure, which are within the scope of protection of the disclosure. Therefore, the scope of protection of the present application should be based on the attached claims.

## Claims

1. A stop valve **characterized by** comprising:
a valve body provided with a first opening and a second opening;
a valve core, wherein at least part of the valve core is located in the valve body, the valve core is movable in the valve body to communicate the first opening with the second opening and cut off a communication between the first opening and the second opening; and
a connecting block, wherein one end of the connecting block is located outside the valve body, the other end of the connecting block is fixedly connected to an end of the valve body, a part of the valve core extends into the connecting block and is in threaded fit with the connecting block;
wherein the connecting block extends towards the valve body to define a seal portion along an axis of the valve core, and when the stop valve is in a fully opened state, the valve core is capable of abutting against the seal portion and forming a linear seal therewith.

2. The stop valve of claim 1, wherein a side surface of the seal portion towards the valve body is fixedly connected to an inner sidewall of the valve body, and a side surface of the seal portion away from the valve body is separate from the valve core.

3. The stop valve of claim 1, wherein a periphery of the valve core protrudes from the inner sidewall of the valve body to define a first conical portion, and a conical surface of the first conical portion is capable of abutting against the seal portion and forming a linear seal therewith.

4. The stop valve of claim 1, further comprising a guiding block located in and connected to the valve body, wherein the guiding block is arranged towards the first opening and the second opening relative to the connecting block, the guiding block is located on a periphery of a part of the valve core, and the valve core is capable of moving along a guiding direction of the guiding block to communicate the first opening with the second opening or cut off the communication between the first opening and the second opening.

5. The stop valve of claim 4, wherein the second opening is located on a periphery of the valve body, and a projection of the guiding block which is located on the valve body along a radial direction of the valve body does not overlap with the second opening.

6. The stop valve of claim 4, wherein the guiding block comprises a guiding bevel and the guiding bevel is disposed on an end of the guiding block towards the connecting block.

7. The stop valve of claim 1, further comprising a valve seat disposed in the valve body, wherein the valve seat is located between the first opening and the second opening and connected to the valve body; and when the stop valve is in a closed state, one end of the valve core is connected to the connecting block, and the other end of the valve core abuts against the valve seat and cooperates with the valve seat in a hard-seal manner or a soft-seal manner.

8. The stop valve of claim 7, wherein a second conical portion is defined by an end of the valve core towards the valve seat, a part of the second conical portion is located in the valve seat, and a conical surface of the second conical portion is capable of abutting against the valve seat and form the linear seal therewith.

9. The stop valve of claim 7, further comprising a first sealing component, wherein an end of the valve core away from the connecting block is provided with a first groove, the first sealing component is disposed in the first groove; and an end surface of the valve seat towards the valve core is provided with a protrusion portion, the protrusion portion protrudes from the valve seat, and the first sealing component abuts against the protrusion portion and form a soft seal.

10. The stop valve of claim 7, wherein the first opening is disposed on an end of the valve body away from the connecting block, the second opening is disposed on a periphery of the valve body, an angle is defined between an axis of the first opening and an axis of the second opening; or the first opening and the second opening are both disposed on the periphery of the valve body, the axis of the first opening is parallel to the axis of the second opening, and the first opening and the second opening are disposed on different sides of the periphery of the valve body, respectively.

11. The stop valve of claim 10, further comprising a first connecting pipe and a second connecting pipe, wherein the first connecting pipe is fixedly connected to the first opening, and the second connecting pipe is fixedly connected to the second opening.

12. The stop valve of claim 11, further comprising a first transitional connecting pipe and a second transitional connecting pipe, wherein the first transitional connecting pipe is sleeved on the first connecting pipe, the second transitional connecting pipe is sleeved on the second connecting pipe, a material of the first transitional connecting pipe is different from a material of the first connecting pipe, and a material of the second transitional connecting pipe is different from a material of the second connecting pipe.
